# EUROPÄISCHE PATENTSCHRIFT

(11) **EP 2 157 336 B1**
(45) Veröffentlichungstag und Bekanntmachung des Hinweises auf die Patenterteilung: **09.11.2011**
(21) Anmeldenummer: 09165960.7
(22) Anmeldetag: 21.07.2009
(51) Int. Cl.: F16H 45/02

(54) **Hydrodynamische Kopplungseinrichtung**
Hydrodynamic coupling device
Dispositif d'accouplement hydrodynamique

(30) Priorität: 18.08.2008 DE 102008041304
(43) Veröffentlichungstag der Anmeldung: 24.02.2010
(73) Patentinhaber: ZF Friedrichshafen AG, 88038 Friedrichshafen (DE)
(72) Erfinder: Wack, Erwin, 97464, Niederwerrn (DE)

(56) Entgegenhaltungen:
- EP-A- 1 795 780
- DE-A1- 3 240 238
- FR-A- 2 568 638

## Beschreibung

Die vorliegende Erfindung betrifft eine hydrodynamische Kopplungseinrichtung, insbesondere Drehmomentwandler, umfassend ein mit einem Antriebsorgan zur gemeinsamen Drehung um eine Drehachse zu koppelndes Gehäuse, an dem Gehäuse ein Pumpenrad mit einer Mehrzahl von Pumpenradschaufeln, in einem Innenraum des Gehäuses ein Turbinenrad mit einer Mehrzahl von Turbinenradschaufeln, ein Abtriebselement, welches mittels einer Überbrückungskupplungsanordnung wahlweise mit dem Gehäuse zur Drehmomentübertragung koppelbar ist, eine Torsionsschwingungsdämpferanordnung im Drehmomentübertragungsweg zwischen der Überbrückungskupplungsanordnung und dem Abtriebselement, wobei die Torsionsschwingungsdämpferanordnung einen ersten Torsionsschwingungsdämpferbereich und seriell dazu einen zweiten Torsionsschwingungsdämpferbereich jeweils mit einer Primärseite und einer bezüglich der Primärseite gegen die Wirkung einer Dämpferelementenanordnung um die Drehachse drehbaren Sekundärseite umfasst, wobei die Dämpferelementenanordnung des ersten Torsionsschwingungsdämpferbereichs und die Dämpferelementenanordnung des zweiten Torsionsschwingungsdämpferbereichs bezüglich eines Relativdrehwinkels der jeweils zugeordneten Primärseite und Sekundärseite eine Mehrzahl von Rückstellwirkungsbereichen mit in Richtung von einer Neutral-Relativdrehlage weg zunehmender Relativdrehwinkel-Rückstellwirkung-Kennliniensteigung aufweisen.

Eine derartige hydrodynamische Kopplungseinrichtung ist aus der EP 1 795 780 A1 bekannt. Bei derartigen hydrodynamischen Kopplungseinrichtungen, beispielsweise ausgestaltet als Drehmomentwandler, besteht auch zum Einsparen von Energie allgemein das Bestreben, eine Überbrückungskupplungsanordnung so früh als möglich, also bereits bei kleinen Drehzahlen, komplett zu schließen und somit das gesamte von einem Antriebsaggregat abgegebene Drehmoment zwischen dem Gehäuse und dem Abtriebselement über die Überbrückungskupplungsanordnung zu übertragen. Ein Problem dabei ist jedoch, dass im Allgemeinen die Dämpfungscharakteristiken bzw. Kennlinien der beiden Torsionschwingungsdämpferbereichen auf den unteren Teillastbereich ausgelegt werden, diese also mit vergleichsweise geringer Steifigkeit ausgebildet werden, um die erforderlichen Entkopplungsqualitäten zu erreichen.

Es ist die Aufgabe der vorliegenden Erfindung, eine hydrodynamische Kopplungseinrichtung, insbesondere Drehmomentwandler, mit einer Torsionsschwingungsdämpferanordnung vorzusehen, welche eine verbesserte Entkopplungsgüte, insbesondere auch für höhere Lastzustände, bereitstellt.

Erfindungsgemäß wird diese Aufgab gelöst durch eine hydrodynamische Kopplungseinrichtung, insbesondere Drehmomentwandler, umfassend ein mit einem Antriebsorgan zur gemeinsamen Drehung um eine Drehachse zu koppelndes Gehäuse, an dem Gehäuse ein Pumpenrad mit einer Mehrzahl von Pumpenradschaufeln, in einem Innenraum des Gehäuses ein Turbinenrad mit einer Mehrzahl von Turbinenradschaufeln, ein Abtriebselement, welches mittels einer Überbrückungskupplungsanordnung wahlweise mit dem Gehäuse zur Drehmomentübertragung koppelbar ist, eine Torsionsschwingungsdämpferanordnung im Drehmomentübertragungsweg zwischen der Überbrückungskupplungsanordnung und dem Abtriebselement, wobei die Torsionsschwingungsdämpferanordnung einen ersten Torsionsschwingungsdämpferbereich und seriell dazu einen zweiten Torsionsschwingungsdämpferbereich jeweils mit einer Primärseite und einer bezüglich der Primärseite gegen die Wirkung einer Dämpferelementenanordnung um die Drehachse drehbaren Sekundärseite umfasst, wobei die Dämpferelementenanordnung des ersten Torsionsschwingungsdämpferbereichs und die Dämpferelementenanordnung des zweiten Torsionsschwingungsdämpferbereichs bezüglich eines Relativdrehwinkels der jeweils zugeordneten Primärseite und Sekundärseite eine Mehrzahl von Rückstellwirkungsbereichen mit in Richtung von einer Neutral-Relativdrehlage weg zunehmender Relativdrehwinkel-Rückstellwirkung-Kennliniensteigung aufweisen.

Durch das Ausgestalten beider Torsionsschwingungsdämpferbereiche bzw. der jeweiligen Dämpferelementenanordnungen mit mehreren Rückstellwirkungsbereichen unterschiedlicher Rückstellwirkung, kann aufgrund der seriellen Wirksamkeit der beiden Torsionsschwingungsdämpferbereiche eine Gesamt-Rückstellwirkung erzielt werden, die vor allem beim Übergang in den Bereich hoher zu übertragender Drehmomente einen mehr oder weniger runden, weniger sprunghaften Anstieg einer Rückstellwirkung-Relativdrehwinkel-Kennlinie aufweist. Dadurch werden stoßartige Kennlinienänderungen, die zu Schwingungsanregungen führen können, vermieden.

Erfindungsgemäß ist vorgesehen, dass ein Rückstellwirkungsverhältnis zwischen einer Rückstellwirkung des ersten Rückstellwirkungsbereichs des zweiten Torsionsschwingungsdämpferbereichs zu einer Rückstellwirkung des ersten Rückstellwirkungsbereichs des ersten Torsionsdämpferbereichs im Bereich zwischen 1,4 und 7,4, vorzugsweise 2,0 und 7,0, liegt.

Insbesondere in Zuordnung zu einem derartigen Rückstellwirkungsverhältnis erlangt eine Torsionsschwingungsdämpferanordnung dann eine besondere Entkopplungsqualität, wenn im ersten Rückstellwirkungsbereich der beiden Torsionsschwingungsdämpferbereiche ein maximales Drehmoment übertragbar ist, welches im Bereich von 50 % eines über die Kopplungseinrichtung zu übertragenden Nennmomentes liegt.

Ein allmählicher Anstieg einer Rückstellwirkungskennlinie kann weiter dadurch unterstützt werden, dass ein Rückstellwirkungsverhältnis zwischen einer Rückstellwirkung des zweiten Rückstellwirkungsbereichs des zweiten Torsionsschwingungsdämpferbereichs zu einer Rückstellwirkung des ersten Rückstellwirkungsbereichs des ersten Torsionsschwingungsdämpferbereichs im Bereich zwischen 3,0 und 8,7, vorzugsweise 3,3 und 8,1, liegt.

Weiter kann vorgesehen sein, dass ein Rückstellwirkungsverhältnis zwischen einer Rückstellwirkung des zweiten Rückstellwirkungsbereichs des zweiten Torsionsschwingungsdämpferbereichs und einer Rückstellwirkung des zweiten Rückstellwirkungsbereichs des ersten Torsionsschwingungsdämpferbereichs im Bereich zwischen 1,8 und 3,0 liegt oder/und, dass ein Rückstellwirkungsverhältnis zwischen einer Rückstellwirkung des zweiten Rückstellwirkungsbereichs des zweiten Torsionsschwingungsdämpferbereichs zu einer Rückstellwirkung des dritten Rückstellwirkungsbereichs des ersten Torsionsschwingungsdämpferbereichs im Bereich zwischen 0,7 und 1,4 liegt.

Um die Schwingungsentkopplungscharakteristik der Torsionsschwingungsdämpferanordnung sowohl im Überbrückungszustand, also bei eingerückter Überbrückungskupplungsanordnung, als auch im Drehmomentwandlungsbetrieb nutzen zu können, wird weiter vorgeschlagen, dass das Turbinenrad mit einer Sekundärseite des ersten Torsionsschwingungsdämpferbereichs bzw. einer Primärseite des zweiten Torsionsschwingungsdämpferbereichs gekoppelt ist.

Es hat sich gezeigt, dass ein mehr oder weniger kontinuierlicher Anstieg der Kennlinie bereits dann erreichbar ist, wenn der zweite Torsionsschwingungsdämpferbereich zwei Rückstellwirkungsbereiche aufweist und der erste Torsionsschwingungsdämpferbereich wenigstens drei Rückstellwirkungsbereiche aufweist.

Die vorliegende Erfindung wird nachfolgend mit Bezug auf die beiliegenden Figuren detailliert erläutert. Es zeigt:
Fig. 1 im Teil-Längsschnitt einen hydrodynamische Drehmomentwandler mit einer Torsionsschwingungsdämpferanordnung;
Fig. 2 Relativdrehwinkel-Rückstellwirkung-Kennlinien der Torsionsschwingungsdämpferbereiche der in Fig. 1 erkennbaren Torsionsschwingungsdämpferanordnung.

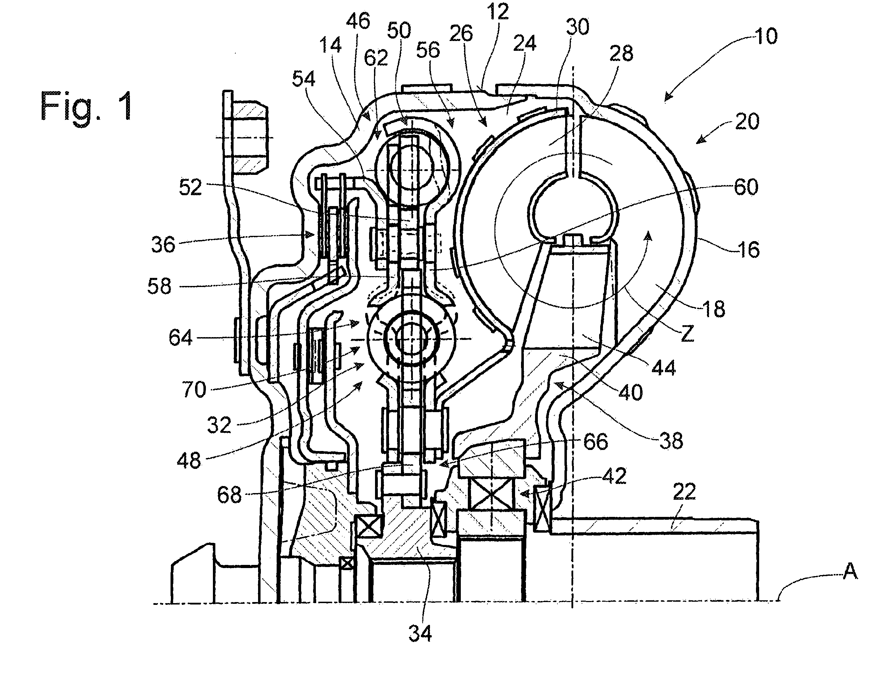

Die Fig. 1 zeigt ein Beispiel eines hydrodynamischen Drehmomentwandlers, der beispielsweise eingesetzt wird, um in einem Antriebsstrang eines Fahrzeugs ein Drehmoment zwischen einem Antriebsaggregat, im Allgemeinen einer Brennkraftmaschine, und einem Getriebe, beispielsweise einem Automatikgetriebe, übertragen zu können. Es sei bereits hier darauf hingewiesen, dass der dargestellte und im Folgenden hinsichtlich seiner wesentlichen Aspekte beschriebene hydrodynamische Drehmomentwandler 10 nur ein Beispiel eines hydrodynamischen Drehmomentwandlers ist, der selbstverständlich in verschiedensten Aspekten anders ausgebildet sein könnte.

Der Drehmomentwandler 10 umfasst ein Gehäuse 12 mit einer motorseitigen Gehäuseschale 14 und einer getriebeseitigen Gehäuseschale 16. Die motorseitige Gehäuseschale 14 wird an eine Antriebswelle, also beispielsweise eine Kurbelwelle einer Brennkraftmaschine, angekoppelt. Die getriebeseitige Gehäuseschale 16 bildet einerseits zusammen mit an einer Innenseite derselben getragenen Pumpenradschaufeln 18 ein Pumpenrad 20 und trägt andererseits in ihrem radial inneren Bereich eine Pumpennabe 22, die in ein Getriebe eingreifend eine Ölpumpe antreiben kann. In einem Gehäuseinnenraum 24 ist ein allgemein mit 26 bezeichnetes Turbinenrad vorgesehen, welches in Richtung einer Drehachse A dem Pumpenrad 20 axial gegenüberliegt, so dass Turbinenradschaufeln 28 zusammen mit den Pumpenradschaufeln 18 einen torusartigen Raum definieren.

Das Turbinenrad 26 bzw. eine Schale 30 desselben ist über eine Torsionsschwingungsdämpferanordnung 32 mit einer Pumpenradnabe 34 zur gemeinsamen Drehung um die Drehachse A gekoppelt. Die dargestellte Torsionsschwingungsdämpferanordnung 32 ist zweistufig, wobei eine erste Stufe zwischen einer Überbrückungskupplung 36 und der Turbinenradschale 30 wirkt, während eine zweite Stufe zwischen der Turbinenradschale 30 und der Turbinenradnabe 34 wirkt. Dies bedeutet, dass bei ausgerückter Überbrückungskupplung 36 nur die radial innere Dämpferstufe zur Torsionsschwingungsdämpfung wirksam ist, während bei eingerückter Überbrückungskupplung 36 beide Dämpferstufen seriell wirksam sind.

Zwischen dem Pumpenrad 20 und dem Turbinenrad 26 ist ein allgemein mit 38 bezeichnetes Leitrad vorgesehen. Dieses umfasst einen Leitradring 40, der über eine Freilaufanordnung 42 auf einer nicht dargestellten Stützhohlwelle so getragen ist, dass in einer Richtung um die Drehachse A rotieren kann, gegen Rotation in der anderen Richtung jedoch blockiert ist. In seinem radial äußeren Bereich trägt der Leitradring 40 eine Mehrzahl von in Umfangsrichtung aufeinander folgenden und im Wesentlichen radial außen sich erstreckenden Leitradschaufeln 44, die somit zwischen dem radial inneren Bereich der Turbinenradschaufeln 28 und der Pumpenradschaufeln 18 liegen.

Eine im Wandlerbetrieb aufgebaute Fluidzirkulation Z, welche das Pumpenrad 20 radial außen in Richtung auf das Turbinenrad 26 zu verlässt und in dem Rotationstorus radial innen das Turbinenrad 26 in Richtung auf das Pumpenrad 20 zu verlässt, umströmt in diesem radial inneren Bereich die Leitradschaufeln 44, d.h., strömt zwischen diesen hindurch, was bekanntermaßen zur Drehmomentenabstützung und damit der Drehmomentverstärkungsfunktionalität eines derartigen hydrodynamischen Drehmomentwandlers führt.

Die Torsionsschwingungsdämpferanordnung 32 ist mit einem radial äußeren ersten Torsionsschwingungsdämpferbereich 46 und einem radial inneren zweiten Torsionsschwingungsdämpferbereich 48 ausgebildet. Die beiden Torsionsschwingungsdämpferbereiche 46, 48 wirken seriell zueinander, wobei der erste Torsionsschwingungsdämpferbereich 46 über die Überbrückungskupplung 36 an das Gehäuse 12 anzukoppeln ist und der zweite Torsionsschwingungsdämpferbereich 48 an die als Abtriebselement wirksame Turbinenradnabe 34 angekoppelt ist.

Ein Eingangsbereich bzw. eine Primärseite 50 des ersten Torsionsschwingungsdämpferbereichs umfasst ein Zentralscheibenelement 52, das mit einem Reibelemententräger 54 fest verbunden ist. Eine Sekundärseite 56 des ersten Torsionsschwingungsdämpferbereichs 46 umfasst zwei miteinander fest verbundene Deckscheibenelemente 58, 60, die jeweiligen Umfangsabstützbereiche für die Dämpferelemente, im Allgemeinen Schraubendruckfedern, einer Dämpferelementenanordnung 62 des ersten Torsionsschwingungsdämpferbereichs bereitstellen.

Eine Primärseite 64 des zweiten Torsionsschwingungsdämpferbereichs 48 umfasst die radial inneren Bereiche der Deckscheibenelemente 58, 60. Eine Sekundärseite 66 des zweiten Torsionsschwingungsdämpferbereichs 48 umfasst ein Zentralscheibenelement 68, welches, ebenso wie die Deckscheibenelemente 58, 60 in ihrem radial inneren Bereich, Abstützbereiche für die Dämpferelemente, im Allgemeinen Schraubendruckfedern, einer Dämpferelementenanordnung 70 des zweiten Torsionsschwingungsdämpferbereichs 48 bereitstellen. Mit den beiden Deckscheibenelementen 58, 60 ist in ihrem radial innersten Bereich weiterhin die Turbinenradschale 30 festgekoppelt, so dass das Turbinenrad 26 massemäßig im Wesentlichen dem Zwischenbereich zwischen den beiden Torsionsschwingungsdämpferbereich 46, 48, also der Sekundärseite 56 des ersten Torsionsschwingungsdämpferbereichs 46 sowie der Primärseite 64 des zweiten Torsionsschwingungsdämpferbereichs 48 zugeordnet ist.

Bei jedem der beiden Torsionsschwingungsdämpferbereiche 46, 48 ist die jeweils zugeordnete Dämpferelementenanordnung 62, 70 mit bezüglich eines Relativdrehwinkels zwischen der jeweiligen Primärseite und Sekundärseite in mehrere Rückstellwirkungsbereiche aufgegliederter Rückstellwirkungscharakteristik ausgebildet. Dies zeigen die Kennlinie K₁ für den ersten Torsionsschwingungsdämpferbereich 46 sowie die Kennlinie K₂ für den zweiten Torsionsschwingungsdämpferbereich 48. Diese Kennlinien geben die Rückstellwirkung des jeweiligen Torsionsschwingungsdämpferbereichs 46, 48 bzw. der zugeordneten Dämpferelementenanordnung 62, 70, hier aufgetragen als Drehmoment, über dem Relativdrehwinkel zwischen der jeweils zugeordnet Primärseite und Sekundärseite ausgehend von einer durch den Winkel 0° repräsentierten Neutral-Relativdrehlage an.

Jeder der durch einen jeweiligen Index 1, 2, 3 usw. indizierte Rückstellwirkungsbereich ist charakterisiert durch eine bestimmte Steigung des dort vorhandenen Kennlinienabschnitts, wobei diese Steigung im Wesentlichen die Federkonstante bzw. die Gesamtfederkonstante der in bzw. für einen jeweiligen Rückstellwirkungsbereich wirksamen Dämpferelemente, also beispielsweise Schraubendruckfedern, repräsentiert.

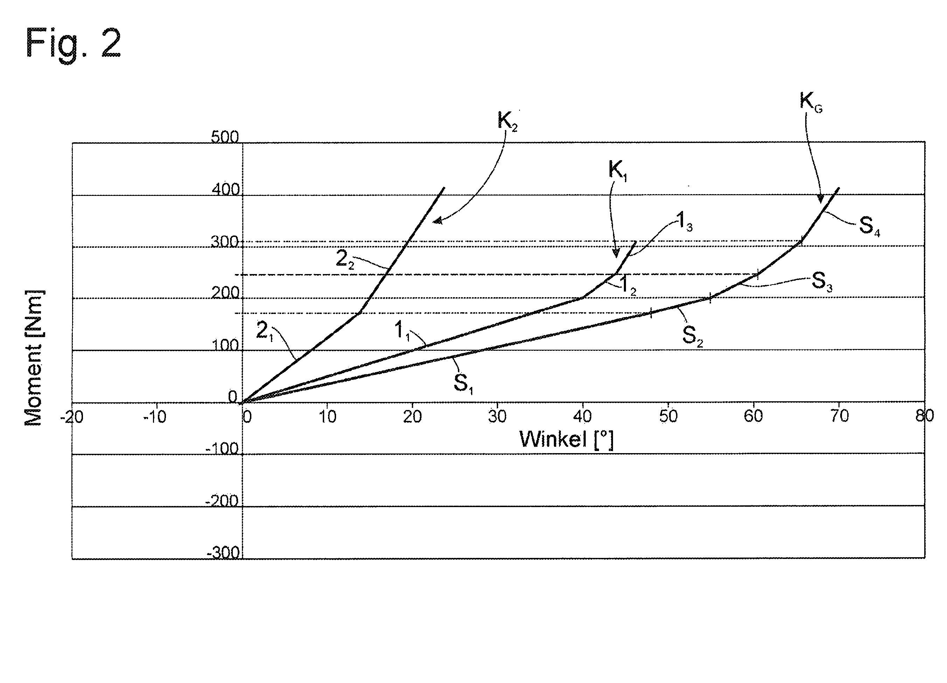

Man erkennt in der Fig. 2, dass beispielsweise der zweite Torsionsschwingungsdämpferbereich 48 eine Kennlinie K₂ aufweist, die bezüglich des Relativdrehwinkels in zwei Rückstellwirkungsbereiche aufgeteilt ist. Ein Rückstellwirkungsbereich 2₁ beginnt am Relativdrehwinkel 0, also in der Neutral-Relativdrehlage, und erstreckt sich etwa bis zu einem Winkel von 13°. Der dann anschließende zweite Rückstellwirkungsbereich 2₂, der charakterisiert ist durch eine größere Steigung des zugehörigen Kennlinienabschnitts, geht bis zu einem Relativdrehwinkel von etwa 23°, bezogen auf die Relativdrehlage zwischen der Primärseite 64 und der Sekundärseite 66 dieses zweiten Torsionsschwingungsdämpferbereichs 48.

Die Kennlinie K₁ des ersten Torsionsschwingungsdämpferbereichs 46 weist drei Rückstellwirkungsbereiche 1₁, 1₂ und 1₃ auf, diese jeweils unmittelbar aneinander anschließend. Auch hier nimmt bei den einzelnen Rückstellwirkungsbereichen ausgehend von dem an die Neutral-Relativdrehlage anschließenden ersten Rückstellwirkungsbereich 1₁ die Rückstellwirkung bzw. Kennliniensteigung zu, was entsprechend eine höhere Steifigkeit indiziert. Auch indiziert der jeweils angezeigte Winkel die Relativauslenkung zwischen der Primärseite 50 und der Sekundärseite 56 des ersten Torsionsschwingungsdämpferbereichs 46.

Durch die Überlagerung dieser beiden seriell geschalteten Wirkcharakteristiken ergibt sich eine Gesamtkennlinie K_{G}, die immer dort, wo bei einem der Torsionsschwingungsdämpferbereiche 46 bzw. 48 ein Übergang zwischen einzelnen Rückstellwirkungsbereichen auftritt, einen entsprechenden Übergang aufweist. Die beiden Kennlinien K₁ und K₂ weisen zusammen insgesamt drei Übergänge zwischen den jeweiligen Rückstellwirkungsbereichen auf, was zu einer entsprechenden Anzahl an Übergängen in der Gesamtkennlinie K_{G} und somit zu den Rückstellwirkungsbereichen S₁, S₂ und S₃ dieser Gesamtkennlinie K_{G} bzw. der gesamten Torsionsschwingungsdämpferanordnung 32 führt. Der bei sehr großen Auslenkungen bzw. großen Drehmomenten dann noch anschließende Rückstellwirkungsbereich S₄ ergibt sich im Wesentlichen durch den zweiten Rückstellwirkungsbereich 2₂ des zweiten Torsionsschwingungsdämpferbereich 48, welcher über den dritten Rückstellwirkungsbereich 1₃ des ersten Torsionsschwingungsdämpferbereichs 46 zu größeren Drehmomenten hinaus noch ansteigt und somit bei Überschreiten eines Drehmoments von beispielsweise etwa 315 Nm im dargestellten Beispiel alleine wirksam ist.

In der Gesamtheit der sich somit ergebenden Rückstellwirkungsbereiche S₁ bis S₄ der Torsionsschwingungsdämpferanordnung 32 weist diese also im Übergang zu großen zu übertragenden Drehmomenten und mithin auch zu großen Relativdrehwinkeln zwischen ihrem Eingangsbereich, also der Primärseite 50 des ersten Torsionsschwingungsdämpferbereichs 46, und ihrem Ausgangsbereich, also der Sekundärseite 66 des zweiten Torsionsschwingungsdämpferbereichs 48, eine allmählich zunehmende Steigung auf. Dies vermeidet beim Drehmomentenanstieg sehr stark stufenartige oder sprunghafte Anstiege der jeweiligen Rückstellwirkungen und dadurch möglicherweise generierte Schwingungsanregungen.

Bei dem erfindungsgemäßen Aufbau einer Torsionsschwingungsdämpferanordnung 32 hat es sich als besonders vorteilhaft erwiesen, wenn ein Rückstellwirkungsverhältnis zwischen der Rückstellwirkung des ersten Rückstellwirkungsbereichs 2₁ der zweiten Torsionsschwingungsdämpferanordnung 48 zur Rückstellwirkung des ersten Rückstellwirkungsbereichs 1₁ des ersten Torsionsschwingungsdämpferbereichs, jede dieser Rückstellwirkungen im Prinzip wiedergegeben durch die Kennliniensteigung im jeweiligen Rückstellwirkungsbereich, in einem Bereich zwischen 1,4 und 7,4, vorzugsweise 2,0 und 7,0, liegt. Dabei sollten diese beiden ersten Rückstellwirkungsbereiche 2₁ und 1₁ so ausgelegt sein, dass das über diese im Dämpfungsbereich maximal übertragbare Drehmoment in einem Bereich von etwa 50 % des über die Torsionsschwingungsdämpferanordnung 32 bzw. den Drehmomentwandler 10 zu übertragenden Nennmoments liegt. Dieses Nennmoment wiederum ist wiedergegeben durch das von einer als Antriebsaggregat beispielsweise wirksamen Brennkraftmaschine maximal abgebbare Drehmoment. Es wird darauf hingewiesen, dass der Torsionsschwingungsdämpferanordnung 32 ein als Kleinlastdämpfer wirksamer Vordämpfer vorgeschaltet sein kann, der bis zu einem Drehmoment von etwa 40 Nm verfügbar ist, der aber hinsichtlich der im normalen Antriebszustand auftretenden Wirkcharakteristik unbeachtet bleiben kann.

Das Rückstellwirkungsverhältnis zwischen dem zweiten Rückstellwirkungsbereich 2₂ des zweiten Torsionsschwingungsdämpferbereichs 48 und dem ersten Rückstellwirkungsbereich 1₁ des ersten Torsionsschwingungsdämpferbereichs 46 sollte im Bereich zwischen 3,0 und 8,7, vorzugsweise 3,3 und 8,1, liegen. Weiterhin sollte das Rückstellwirkungsverhältnis zwischen dem zweiten Rückstellwirkungsbereich 2₂ des zweiten Torsionsschwingungsdämpferbereichs 48 und dem zweiten Rückstellwirkungsbereich 1₂ des ersten Torsionsschwingungsdämpferbereichs 46 im Bereich zwischen 1,8 und 3,0 liegen. Das Rückstellwirkungsverhältnis zwischen der Rückstellwirkung des zweiten Rückstellwirkungsbereichs 2₂ des zweiten Torsionsschwingungsdämpferbereichs 48 und dem dritten Rückstellwirkungsbereich 1₃ des ersten Torsionsschwingungsdämpferbereichs 46 sollte im Bereich zwischen 0,7 und 1,4 liegen.

Weiter kann bei der erfindungsgemäß aufgebauten Torsionsschwingungsdämpferanordnung 10 vorgesehen sein, dass der zweite Torsionsschwingungsdämpferbereich 48 derjenige ist, welcher den Endanschlag definiert, also den Drehwinkelbereich begrenzt, innerhalb welchem über die Torsionsschwingungsdämpferanordnung ein Drehmoment im Wirkungsbereich von Dämpferelementen übertragen werden kann.

Die Ausgestaltung der beiden Torsionsschwingungsdämpferbereiche 46, 48, mit der in der Fig. 2 erkennbaren gestuften Wirksamkeit, kann beispielsweise dadurch erlangt werden, dass bei den jeweiligen Dämpferelementenanordnungen Dämpferfedern vorhanden sind, die in unterschiedlichen Relativdrehwinkelbereichen zwischen der jeweiligen Primärseite und Sekundärseite wirksam werden. Hierzu kann beispielsweise vorgesehen sein, dass bei den Dämpferelementenanordnungen ineinander geschachtelte Dämpferfedern vorhanden sind, wie im Falle des zweiten Torsionsschwingungsdämpferbereichs 48 in Fig. 1 angedeutet, die unterschiedliche Längen aufweisen, so dass beispielsweise zunächst die jeweils äußeren Federn wirksam sind, um beispielsweise den jeweiligen ersten Rückstellwirkungsbereich 1₁ bzw. 2₁ festzulegen. Im Übergang zum nächstfolgenden, also beispielsweise zweiten Rückstellwirkungsbereich 1₂ bzw. 2₂ wird dann auch zusätzlich die innere Feder wirksam, so dass im weiteren Verlauf dann beide Federn zu komprimieren sind. Zur Erlangung eines noch weiter anschließenden dritten Rückstellwirkungsbereichs kann eine dreifache Ineinanderschachtelung von Federn mit unterschiedlicher Länge bzw. unterschiedlichem Wirkungsbereich erlangt werden. Diese gestufte Charakteristik kann jedoch auch dadurch erreicht werden, dass bei den bzw. zumindest einer der Dämperelementenanordnungen 62, 70 verschieden gestaltete Dämpferelementeneinhalten in Umfangsrichtung vorgesehen sind, die dann in unterschiedlichen Relativdrehbereichen der zugeordneten Primärseite bzw. Sekundärseite wirksam sind. Auch eine Kombination verschiedener Dämpferelementeneinheiten mit verschiedenen Mechanismen zur Erzeugung gestufter Kennliniensteigungen ist selbstverständlich möglich.

Weiterhin ist darauf hinzuweisen, dass die in der Fig. 2 dargestellte Charakteristik selbstverständlich nicht nur in einer Auslenkungsrichtung zwischen Primärseite und Sekundärseite vorgesehen sein kann, also beispielsweise für den Zugbetrieb. Selbstverständlich kann ein symmetrischer Aufbau dazu dienen, für die Zugrichtung und die Schubrichtung gleiche Wirkcharakteristiken zu erzielen, oder es kämen durch entsprechende Ausgestaltung auch unterschiedliche Wirkcharakteristiken erzielt werden.

## Patentansprüche

1. Hydrodynamische Kopplungseinrichtung, insbesondere Drehmomentwandler, umfassend:
- ein mit einem Antriebsorgan zur gemeinsamen Drehung um eine Drehachse (7) zu koppelndes Gehäuse (12),
- an dem Gehäuse (12) ein Pumpenrad (20) mit einer Mehrzahl von Pumpenradschaufeln (18),
- in einem Innenraum (24) des Gehäuses (12) ein Turbinenrad (26) mit einer Mehrzahl von Turbinenradschaufeln (28),
- ein Abtriebselement (34), welches mittels einer Überbrückungskupplungsanordnung (36) wahlweise mit dem Gehäuse (12) zur Drehmomentübertragung koppelbar ist,
- eine Torsionsschwingungsdämpferanordnung (32) im Drehmomentübertragungsweg zwischen der Überbrückungskupplungsanordnung (36) und dem Abtriebselement (34), wobei die Torsionsschwingungsdämpferanordnung (36) einen ersten Torsionsschwingungsdämpferbereich (46) und seriell dazu einen zweiten Torsionsschwingungsdämpferbereich (48) jeweils mit einer Primärseite (50) und einer bezüglich der Primärseite (50, 64) gegen die Wirkung einer Dämpferelementenanordnung (62, 70) um die Drehachse (7) drehbaren Sekundärseite (56, 66) umfasst, wobei die Dämpferelementenanordnung (62) des ersten Torsionsschwingungsdämpferbereichs (46) und die Dämpferelementenanordnung (70) des zweiten Torsionsschwingungsdämpferbereichs (48) bezüglich eines Relativdrehwinkels der jeweils zugeordneten Primärseite (50, 64) und Sekundärseite (56, 66) eine Mehrzahl von Rückstellwirkungsbereichen (1₁, 1₂, 1₃; 2₁, 2₂) mit in Richtung von einer Neutral-Relativdrehlage weg zunehmender Relativdrehwinkel-Rückstellwirkung-Kennliniensteigung aufweisen,
**dadurch gekennzeichnet,**
**dass** ein Rückstellwirkungsverhältnis zwischen einer Rückstellwirkung des ersten Rückstellwirkungsbereichs (2₁) des zweiten Torsionsschwingungsdämpferbereichs (48) zu einer Rückstellwirkung des ersten Rückstellwirkungsbereichs (1₁) des ersten Torsionsdämpferbereichs (46) im Bereich zwischen 1,4 und 7,4, vorzugsweise 2,0 und 7,0, liegt.

2. Hydrodynamische Kopplungseinrichtung nach Anspruch 1
**dadurch gekennzeichnet, dass** im ersten Rückstellwirkungsbereich (1₁, 2₁) der beiden Torsionsschwingungsdämpferbereiche (46, 48) ein maximales Drehmoment übertragbar ist, welches im Bereich von 50 % eines über die Kopplungseinrichtung zu übertragenden Nennmomentes liegt.

3. Hydrodynamische Kopplungseinrichtung nach Anspruch 1 oder 2,
**dadurch gekennzeichnet, dass** ein Rückstellwirkungsverhältnis zwischen einer Rückstellwirkung des zweiten Rückstellwirkungsbereichs (2₂) des zweiten Torsionsschwingungsdämpferbereichs (48) zu einer Rückstellwirkung des ersten Rückstellwirkungsbereichs (1₁) des ersten Torsionsschwingungsdämpferbereichs (46) im Bereich zwischen 3,0 und 8,7, vorzugsweise 3,3 und 8,1, liegt.

4. Hydrodynamische Kopplungseinrichtung nach einem der Ansprüche 1 bis 3,
**dadurch gekennzeichnet, dass** ein Rückstellwirkungsverhältnis zwischen einer Rückstellwirkung des zweiten Rückstellwirkungsbereichs (2₂) des zweiten Torsionsschwingungsdämpferbereichs (48) und einer Rückstellwirkung des zweiten Rückstellwirkungsbereichs (1₂) des ersten Torsionsschwingungsdämpferbereichs (46) im Bereich zwischen 1,8 und 3,0 liegt.

5. Hydrodynamische Kopplungseinrichtung nach einem der Ansprüche 1 bis 4,
**dadurch gekennzeichnet, dass** ein Rückstellwirkungsverhältnis zwischen einer Rückstellwirkung des zweiten Rückstellwirkungsbereichs (2₂) des zweiten Torsionsschwingungsdämpferbereichs (48) zu einer Rückstellwirkung des dritten Rückstellwirkungsbereichs (1₃) des ersten Torsionsschwingungsdämpferbereichs (46) im Bereich zwischen 0,7 und 1,4 liegt.

6. Hydrodynamische Kopplungseinrichtung nach Anspruch 1,
**dadurch gekennzeichnet, dass** der zweite Torsionsschwingungsdämpferbereich (48) zwei Rückstellwirkungsbereiche (2₁, 2₂) aufweist und der erste Torsionsschwingungsdämpferbereich (46) wenigstens drei Rückstellwirkungsbereiche (1₁, 1₂, 1₃) aufweist.

## Claims

1. Hydrodynamic coupling device, in particular torque converter, comprising:
- a housing (12) to be coupled to a driving element for joint rotation about a rotational axis (7),
- at the housing (12), a pump wheel (20) with a plurality of pump wheel blades (18),
- in an interior (24) of the housing (12), a turbine wheel (26) with a plurality of turbine wheel blades (28),
- an output element (34) which can be coupled by means of a bridging clutch arrangement (36) optionally to the housing (12) for torque transmission,
- a torsional vibration damper arrangement (32) in the torque transmission path between the bridging clutch arrangement (36) and the output element (34), therein the torsional vibration damper arrangement (36) comprises a first torsional vibration damper region (46) and in series with this a second torsional vibration damper region (48) in each case with a primary side (50) and a secondary side (56, 66) which is rotatable with respect to the primary side (50, 64) counter to the action of a damper element arrangement (62, 70) about the rotational axis (7), wherein the damper element arrangement (62) of the first torsional vibration damper region (46) and the damper element arrangement (70) of the second torsional vibration damper region (48) have a plurality of restoring action regions (1₁, 1₂, 1₃, 2₁, 2₂) with a relative rotational angle-restoring action-characteristic curve pitch increasing away from a neutral relative rotational position relative to a relative rotational angle of the respectively assigned primary side (50, 64) and secondary side (56, 66),
**characterized in that**
a restoring action ratio of a restoring action of the first restoring action region (2₁) of the second torsional vibration damper region (48) to a restoring action of the first restoring action region (1₁) of the first torsion damper region (46) lies in the range between 1.4 and 7.4, preferably 2.0 and 7.0.

2. Hydrodynamic coupling device according to Claim 1,
**characterized in that**, in the first restoring action region (1₁, 2₁) of the two torsional Vibration damper regions (46, 48), a maximum torque can be transmitted which lies in the range of 50% of a setpoint torque to be transmitted via the coupling device.

3. Hydrodynamic coupling device according to Claim 1 or 2,
**characterized in that** a restoring action ratio of a restoring action of the second restoring action region (2₂) of the second torsional vibration damper region (48) to a restoring action of the first restoring action region (1₁) of the first torsional vibration damper region (46) lies in the range between 3.0 and 8.7, preferably 3.3 and 8.1.

4. Hydrodynamic coupling device according to one of Claims 1 to 3,
**characterized in that** a restoring action ratio of a restoring action of the second restoring action region (2₂) of the second torsional vibration damper region (48) and a restoring action of the second restoring action region (1₂) of the first torsional vibration damper region (46) lies in the range between 1.8 and 3.0.

5. Hydrodynamic coupling device according to one of Claims 1 to 4,
**characterized in that** a restoring action ratio of a restoring action of the second restoring action region (2₂) of the second torsional vibration damper region (48) to a restoring action of the third restoring action region (1₃) of the first torsional vibration damper region (46) lies in the range between 0.7 and 1.4.

6. Hydrodynamic coupling device according to Claim 1,
**characterized in that** the second torsional vibration damper region (48) has two restoring action regions (2₁, 2₂) and the first torsional vibration damper region (46) has at least three restoring action regions (1₁, 1₂, 1₃) .

## Revendications

1. Dispositif d'accouplement hydrodynamique, en particulier convertisseur de couple, comprenant :
- un boîtier (12) à accoupler à un organe d'entraînement en vue d'une rotation commune autour d'un axe de rotation (7),
- sur le boîtier (12), un rotor de pompe (20) avec une pluralité d'aubes de rotor de pompe (18),
- dans un espace interne (24) du boîtier (12), un rotor de turbine (26) avec une pluralité d'aubes de rotor de turbine (28),
- un élément de sortie (34), qui peut être accouplé au moyen d'un agencement d'embrayage de pontage (36) de manière sélective au boîtier (12) en vue du transfert de couple,
- un agencement d'amortisseur d'oscillations de torsion (32) dans la voie de transfert de couple entre l'agencement d'embrayage de pontage (36) et l'élément de sortie (34), l'agencement d'amortisseur d'oscillations de torsion (32) comprenant une première région d'amortissement d'oscillations de torsion (46) et, montée en série avec celle-ci, une deuxième région d'amortissement d'oscillations de torsion (48), à chaque fois avec un côté primaire (50) et un côté secondaire (56, 66) pouvant tourner autour de l'axe de rotation (7) par rapport au côté primaire (50, 64) à l'encontre de l'action d'un agencement d'éléments amortisseurs (62, 70), l'agencement d'éléments amortisseurs (62) de la première région d'amortissement d'oscillations de torsion (46) et l'agencement d'éléments amortisseurs (70) de la deuxième région d'amortissement d'oscillations de torsion (48) présentant par rapport à un angle de rotation relatif du côté primaire (50, 64) et du côté secondaire (56, 66) respectivement associés, une pluralité de régions d'effet de rappel (1₁, 1₂, 1₃, 2₁, 2₂) avec une pente de courbe caractéristique angle de rotation relatif - effet de rappel croissant en s'éloignant d'une position relative neutre,
**caractérisé en ce**
**qu'**un rapport d'effet de rappel entre un effet de rappel de la première région d'effet de rappel (2₁) de la deuxième région d'amortissement d'oscillations de torsion (48) et un effet de rappel de la première région d'effet de rappel (1₁) de la première région d'amortissement d'oscillations de torsion (46) est compris dans la plage de 1,4 à 7,4, de préférence de 2,0 à 7,0.

2. Dispositif d'accouplement hydrodynamique selon la revendication 1,
**caractérisé en ce que** dans la première région d'effet de rappel (1₁, 2₁) des deux régions d'amortisseur d'oscillations de torsion (46, 48), un couple maximal peut être transmis, lequel se situe dans la plage de 50% d'un couple nominal à transmettre par le biais du dispositif d'accouplement.

3. Dispositif d'accouplement hydrodynamique selon la revendication 1 ou 2,
**caractérisé en ce qu'**un rapport d'effet de rappel entre un effet de rappel de la deuxième région d'effet de rappel (2₂) de la deuxième région d'amortissement d'oscillations de torsion (48) et un effet de rappel de la première région d'effet de rappel (1₁) de la première région d'amortissement d'oscillations de torsion (46) est compris dans la plage de 3,0 à 8, 7, de préférence de 3,3 à 8,1.

4. Dispositif d'accouplement hydrodynamique selon l'une quelconque des revendications 1 à 3, **caractérisé en ce qu'**un rapport d'effet de rappel entre un effet de rappel de la deuxième région d'effet de rappel (2₂) de la deuxième région d'amortissement d'oscillations de torsion (48) et un effet de rappel de la deuxième région d'effet de rappel (1₂) de la première région d'amortissement d'oscillations de torsion (46) est compris dans la plage de 1,8 à 3,0.

5. Dispositif d'accouplement hydrodynamique selon l'une quelconque des revendications 1 à 4, **caractérisé en ce qu'**un rapport d'effet de rappel entre un effet de rappel de la deuxième région d'effet de rappel (2₂) de la deuxième région d'amortissement d'oscillations de torsion (48) et un effet de rappel de la troisième région d'effet de rappel (1₃) de la première région d'amortissement d'oscillations de torsion (46) est compris dans la plage de 0,7 à 1,4.

6. Dispositif d'accouplement hydrodynamique selon la revendication 1,
**caractérisé en ce que** la deuxième région d'amortissement d'oscillations de torsion (48) présente deux régions d'effet de rappel (2₁, 2₂) et la première région d'amortissement d'oscillations de torsion (46) présente au moins trois régions d'effet de rappel (1₁, 1₂, 1₃) .
